# EUROPEAN PATENT SPECIFICATION

(11) **EP 2 646 732 B1**
(45) Date of publication and mention of the grant of the patent: **19.07.2017**
(21) Application number: 11805119.2
(22) Date of filing: 05.12.2011
(51) Int. Cl.: F16L 27/107, F16L 51/00

(54) **PIPE SYSTEM**
ROHRSYSTEM
SYSTÈME DE TUBES

(30) Priority: 03.12.2010 GB 201020504
(43) Date of publication of application: 09.10.2013
(73) Proprietor: Magma Global Limited, Western Road, Portsmouth PO6 3EZ (GB)
(72) Inventor: JONES, Martin, Peter, William, Dell Quay Chichester PO20 7EE (GB); TAVNER, Charles, Alexander, West Ashling West Sussex PO18 8HL (GB); ROBERTS, Roberts Richard Damon Goodman, Southampton Hampshire SO32 1HL (GB)
(74) Representative: Wilding, Richard Alan
(86) International application number: PCT/GB2011/001684
(87) International publication number: WO 2012/072992

(56) References cited:
- GB-A- 1 576 204
- US-A- 3 460 856

## Description

### FIELD OF THE INVENTION

The present invention relates to a pipe system. In particular, but not exclusively, embodiments of the invention relate to a pipe system comprising a discrete composite pipe section and which is suitable for use in applications in the oil and gas industry.

### BACKGROUND TO THE INVENTION

Pipe systems are used in a wide variety of industries for the confined transportation of fluids and/or equipment. In the oil and gas industry, for example, pipe systems may be used to transport hydrocarbons and/or equipment from a subterranean formation to surface. To give an example, in order to recover hydrocarbons from a subsea formation, a well may be created which extends from a wellhead located on the sea floor to the hydrocarbon-bearing rock of the formation. A pipe, generally known as a riser, may be used to couple or "tie" the wellhead to a vessel located on the surface. In some cases, the riser may be coupled to a single wellhead. In other cases, a more complex arrangement may be provided which involves a number of other pipes, such as flow lines or jumpers, to couple a number of wellheads to a common riser. In use, hydrocarbons may be transported from the formation to a wellhead, and thereafter to the surface vessel via the flow lines and riser. Risers, and other pipe systems, may also be used to accommodate deployment and retrieval of equipment, such as wellbore equipment. For example, risers, and other pipe systems may be used to accommodate wellbore drilling equipment, completion equipment, intervention or workover equipment or the like.

In subsea applications, pipe systems used in the construction of risers, flow lines, jumpers and the like are typically subject to a range of forces, stresses and strains, including for example those forces resulting from applied pressures and temperatures during operation. For example, the outer wall of a given flow line may be subject to high pressure and low temperatures from the subsea environment while the inner wall of the flow line may be subject to high temperatures and pressures from the hydrocarbons being transported. Such forces and the like may establish significant deformations within a pipe system, which may result in uncontrolled or undesired movement of the pipe system.

Moreover, pipe systems may also be subject to significant variations in forces, stresses and strains. In some instances, operation of a given flow line may be intermittent, this resulting in significant variation in the forces acting on the flow line during its life. This may establish cyclic application of strains within the pipe line, which may result in material fatigue, the requirement to use complex architecture or the like.

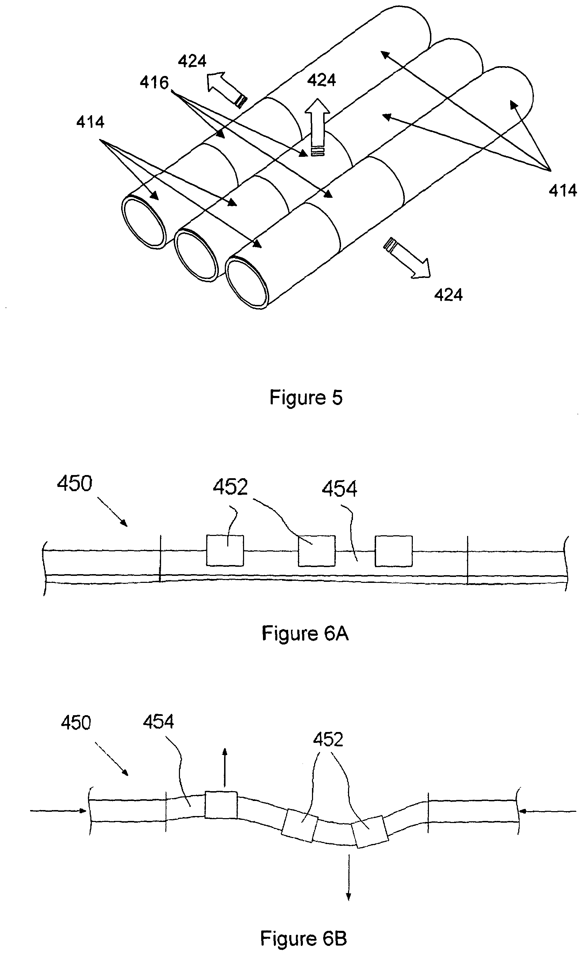

Variations in temperature, for example, may result in repeated axial expansion and/or contraction of a pipe line. These variations are typically too great for conventional steel pipes to absorb axially. Therefore, it is common to introduce specific architecture within a pipe line, typically called "flow line buckle" regions which are arranged to focus and to accommodate axial expansion and contraction within the pipe system. These flow line buckle regions are typically established by locally reducing the restraining forces within the pipe line in these regions. This may be achieved by means of floatation (or reduction in mass to increase floatation) to reduce the restraint on the pipe by the seabed. Such a known arrangement is shown in Figure 6 of the accompanying drawings, wherein Figure 6A is a side view of a continuous steel pipe line 450 which includes buoyant portions 452 provided within a flow line buckle regions 454. The buoyant portions 452 reduce the restrain on the pipe line 450 within the flow line buckle portion 454 which permits this region to flex, for example in an s-shape, as shown in the side view in Figure 6B to accommodate expansion and contraction along the pipe line.

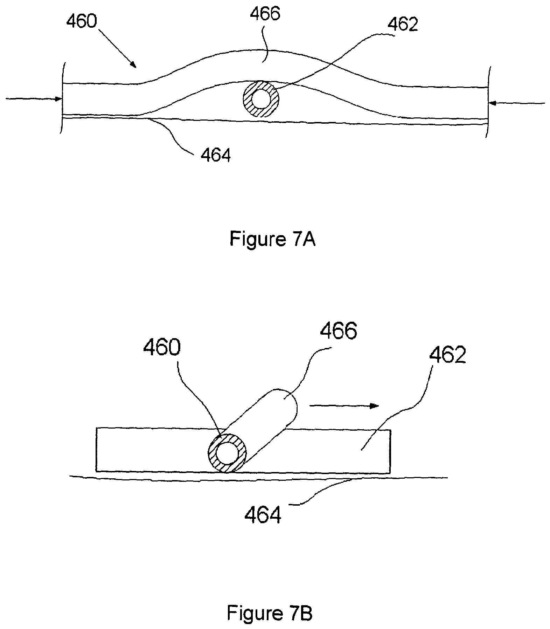

In another known arrangement, such as shown in Figure 7A, a pipe line 460 is passed over another pipe 462 arranged perpendicular to the pipe line 460 to raise a portion clear of the sea bed 464 and form a flow line buckle region 466. When the pipe line 460 expands, for example due to thermal effects, the flow line buckle region deforms perpendicular to the axial direction of the pipe line 460, as shown in the sectional end view in Figure 7B.

However, pipe or flow lines are also subject to multiphase flow, such as slug flow, and intermittent operation (switching on and off). Due to the non-axial arrangement of known integrated buckle regions, such as that shown in Figures 6 and 7, this multiphase flow or intermittent operation, for example, induces unpredictable dynamic loads in these sections that can lead to deformations that exceed the tensile strength of the section of pipe or create excessive fatigue loads due to repeated flexing. To avoid this, deformation absorbers exist such as those of US 3 460 856 or GB 1 576 204.

### SUMMARY OF THE INVENTION

According to the invention, a pipeline or pipe system configured for use in a subsea location is provided comprising: a metallic pipe section having a wall comprising a metallic material; and a deformation absorber coupled to the metallic pipe section and comprising a composite pipe section having a wall comprising a composite material formed of at least a matrix comprising a polyether ether ketone and a plurality of reinforcing fibres embedded within the matrix, wherein the composite material is constructed to cause the deformation absorber to sustain a greater level of strain than the metallic pipe section when the pipeline is subject to deformation by a load event such that a larger proportion of deformation within the pipeline caused by a load event is focussed within the deformation absorber, wherein the composite pipe section is constructed to bend in a lateral direction during deformation of the pipe system caused by an axial load, and wherein the composite pipe section (416) comprises a homogeneous pipe construction and wherein the composite pipe section (416) defines a substantially straight pipe section prior to deformation by a load event.

The metallic pipe section may be defined as a first pipe section, and the composite pipe section may be defined as a second pipe section.

The deformation absorber may be directly coupled to the metallic pipe section. The deformation absorber may be indirectly coupled to the metallic pipe section, for example via an interface component. The deformation absorber may be interposed within the metallic pipe section. The pipeline or pipe system may comprise a connector arrangement interposed between the metallic pipe section and the deformation absorber to permit coupling therebetween.

An aspect of the present invention may relate to a pipeline or pipe system, comprising:
a first pipe section having a wall comprising a metal material; and
a second pipe section coupled to the first pipe section in end-to-end relation and having a wall comprising a composite material formed of at least a matrix and a plurality of reinforcing fibres embedded within the matrix,
wherein the second pipe section is configured to sustain a greater level of strain than the first pipe section when the pipe system is subject to deformation by a load event such that a larger proportion of deformation within the pipeline caused by a load event is focussed within the second pipe section.

The first pipe section may be defined as a metallic pipe section, and the second pipe section may be defined as a composite pipe section.

Accordingly, in any of the aspects defined above, during deformation of the pipeline or system caused by a load event, a greater proportion of strain will be sustained by the composite or second pipe section. This may assist in minimising the level of strain applied within the metallic or first pipe section, to the extent that a greater proportion of the strain induced within the pipeline or system during a load event will be sustained within the composite or second pipe section. As such, the second pipe section may function to protect the first pipe section during a deformation and load event applied to the pipe system. For example, the second pipe section may be configured to prevent or substantially minimise the risk of strains and/or stresses being applied within the first pipe section which may cause yield limits of the metal material of said first pipe section to be exceeded. The second pipe section may be configured to minimise the risk of failure, material fatigue, adverse or undesired elastic or plastic deformation, or the like, of the first pipe section.

The pipe system may be configured such that a larger proportion of deformation within said system caused by a load event is focussed within the second pipe section. Accordingly, the second pipe section may be configured to accommodate a relatively greater proportion of deformation than the first pipe section. In embodiments of the present invention the second pipe section is configured to accommodate or absorb substantially all deformation of the pipe system during a load event.

The second pipe section may be configured to sustain a greater level of strain than the first pipe section when the pipe system is subject to deformation by a cyclical load event. Such a cyclical load event may be established during intermittent flow through the pipe system, during multi phase flow through the pipe system, during vortex shedding events when the pipe system is immersed in a flowing fluid, or the like.

The second pipe section may be configured to sustain a greater level of strain than the first pipe section when the pipe system is subject to deformation by an applied axial load. Accordingly, in this arrangement the second pipe section may be configured to accommodate a larger relative degree of axial expansion and/or contraction. In embodiments of the present invention, where an axial load is applied to the pipe system substantially all resulting axial deformation is absorbed by or restricted to the second pipe section.

The second pipe section may be configured to sustain a greater level of strain than the first pipe section when the pipe system is subject to deformation by an applied radial load.

The second pipe section may be configured to sustain a greater level of strain than the first pipe section when the pipe system is subject to deformation by a bending moment. Accordingly, in this arrangement the second pipe section may be configured to accommodate a larger relative degree of longitudinal bending. In embodiments of the present invention, where a bending moment is applied to the pipe system substantially all longitudinal bending is absorbed by or restricted to the second pipe section.

The second pipe section may be configured to sustain a greater level of strain than the first pipe section when the pipe system is subject to deformation by an applied torsional load. Accordingly, in this arrangement the second pipe section may be configured to accommodate a larger relative degree of twisting. In embodiments of the present invention, where a torsional load is applied to the pipe system substantially all resulting twisting deformation is absorbed by or restricted to the second pipe section.

A load event may be considered to be any event which applies a load or stress to or within the pipe system.

In one embodiment a load event may be established by thermal properties of the pipe system, for example thermal properties of one or both of the first and second pipe sections. A load event may be established by thermal expansion and/or contraction of the pipe system. In such an arrangement, deformation caused by thermal expansion and/or contraction may be accommodated, for example substantially entirely accommodated, by the second pipe section. For example, thermal expansion of one or both of the first and second pipe sections may generate a compressive axial load or stress within the pipe system. In such an arrangement or eventuality the second pipe section may be configured to sustain a greater level of compressive strain than the first pipe section. Further, thermal contraction of one or both of the first and second pipe sections may generate a tensile axial load or stress within the pipe system. In this arrangement or eventuality the second pipe section may be configured to sustain a greater level of tensile strain than the first pipe section.

A load event may be established by exposure of the pipe system to a service environment. For example external equipment or the like may engage the pipe system to generate an applied load. Further, an environmental condition may establish an applied load, such as internal or external fluid pressure, for example during submergence of the pipe system, fluid drag, vortex induced vibration, for example during submergence in a flowing fluid, or the like.

The second pipe section may define a greater resistance to one or more failure modes under load than the first pipe section. For example, the second pipe section may define a greater resistance to a buckling failure mode than the first pipe section. In such an arrangement the second pipe section may be configured to accommodate a greater degree of axial compressive loading or stress than the first pipe section prior to a buckling event. The second pipe section may be configured to accommodate a greater degree of axial compressive strain than the first pipe section prior to a buckling event. Accordingly, the second pipe section may sustain a greater level of strain than the first pipe section while retaining a substantially straight configuration.

The second pipe section may define a greater resistance to a tensile failure mode than the first pipe section. In such an arrangement the second pipe section may be configured to accommodate a greater degree of axial tensile loading or stress than the first pipe section prior to a failure event.

As defined above, the composite material of the composite or second pipe section may be constructed to permit said pipe section to sustain a greater level of strain than the first pipe section when the pipe system is subject to deformation by an applied load. For example, the composite material may comprise desirable constructional properties, such as matrix type, fibre type, fibre alignment angle, composite material pre-stress, fibre packing density or the like.

The second pipe section may define a substantially straight pipe section. The substantially straight second pipe section may be configured to remain substantially straight during deformation of the pipe system caused by an axial load.

The second pipe section may be configured to be deformed laterally during deformation of the pipe system caused by an axial load. In such an arrangement deformation of the pipe system may be accommodated in a controlled manner by lateral deflection of the second pipe section.

The second pipe section may define a bent pipe section, wherein said bent pipe section may be configured to absorb deformation within the pipe system caused by an applied load. In such an arrangement, the composite material of the second pipe section may permit effects of cyclical loading to be minimised. For example, material fatigue is not of particular concern in composite material.

The second pipe section may comprise a homogeneous pipe construction. For example, the second pipe section may be formed or otherwise configured to have consistent properties in at least one of axially, circumferentially or radially of the pipe.

Alternatively, the second pipe section may be formed or configured to have a localised constructional variation.

The localised constructional variation may comprise a variation in construction of the second pipe section wall, or part of the second pipe section wall.

In particular embodiments, the localised constructional variation may comprise a circumferential variation in construction of the second pipe section wall, such as in a circumferential segment of pipe section wall.

The localised constructional variation may comprise an axial and/or longitudinal variation in construction of the second pipe section wall.

The localised constructional variation may comprise a radial variation in construction of the second pipe section wall.

Accordingly, the second pipe section may comprise at least two wall sections, segments and/or layers having different constructional properties.

The localised constructional variation may be selected from at least one of: modulus of elasticity; second moment of area; coefficient of thermal expansion; thermal conductivity; strength such as for example, tensile strength, compressive strength, hoop strength, flexural strength or the like.

The local constructional variation in at least one longitudinal portion may be selected to accommodate or absorb an anticipated movement, deformation or the like within the pipe, such as a longitudinal expansion movement or deformation. In such an arrangement the local constructional variation may be selected to provide a desired compression property or characteristic to permit axial expansion of the pipe to be accommodated within the associated longitudinal portion without any, or at least without any significant lateral deflection or deformation.

The localised constructional variation may comprise a variation in the composite material. For example, the localised constructional variation may comprise a variation in one or both of a matrix material and reinforcing fibres of the second pipe section. The localised constructional variation may comprise a variation in the type and/or volume of the matrix material. Alternatively or additionally, the localised constructional variation may comprise one or more of a variation in the distribution density of the reinforcing fibres within the matrix material, the type of fibre within the composite material, fibre alignment angle within the composite material, fibre tension, and fibre stress.

In particular embodiments, the fibre tension or stress may be considered to be the tension or stress applied to a fibre during manufacture of the pipe section, which tension or stress may be at least partially retained as a pre-tension or pre-stress within the manufactured pipe section. Thus, a localised constructional variation in fibre tension or stress in the second pipe section may permit a desired characteristic of the pipe system to be achieved, such as a desired bending characteristic. In use, this may assist in the positioning and/or manipulation of the pipe system, for example during installation, retrieval, coiling or the like. Furthermore, a localised constructional variation in fibre tension or stress in the second pipe section may assist to shift a neutral position of strain within the pipe section wall, which may assist in providing a more even or level strain distribution when the pipe system is in use, and/or for example is stored, such as in a coiled configuration.

The localised constructional variation may be achieved by use of at least one insert. An insert may be installed within the second pipe section wall during manufacture or following manufacture of the second pipe section.

The localised constructional variation may comprise a variation in geometry.

The localised constructional variation may remain constant along a length of the pipe.

The localised constructional variation may vary along a length of the pipe.

The matrix material comprises a polyether ketone.

Accordingly, it will be recognised that a second pipe section having a wall comprising a composite material, and which provides a local variation in a property of the pipe system along the length of the pipe system facilitates greater control or certainty over the behaviour of the pipe system. Moreover, the risk that the pipe system and associated couplings and equipment will be deformed or damaged is reduced.

The pipeline or pipe system may comprise one or a plurality of deformation absorbers. The pipeline or pipe system may comprise a single second pipe section or may comprise two or more second pipe sections.

The pipe system may also comprise a single first pipe section or two or more first pipe sections.

The first pipe section may be of any suitable form or construction. In particular embodiments, the first pipe section may comprise steel pipe. In subsea oil and gas recovery applications, for example, the first pipe section may comprise pipe as may be used for conventional risers, flow line, jumpers and the like. In alternative embodiments and arrangements, aluminium, titanium, metal alloys, ceramics, plastics, composites, concrete or other suitable materials may be used in the construction of the first pipe section.

The second pipe section may be configured for coupling to the first pipe section.

The pipeline or pipe system may comprise a connector arrangement interposed between the first and second pipe sections to permit coupling therebetween.

The second pipe section may be coupled to the first pipe section by any suitable means. For example, the second pipe section may be coupled to the first pipe section by a flange connection. Alternatively, the second pipe section may be bonded, welded, cast or otherwise secured to the first pipe section to form the pipe system.

As noted above, the second pipe section may be coupled to an end of a first pipe section. Thus, the first and second pipe sections may be abutted together and coupled together to form a continuous bore for transport of fluid, such as hydrocarbons, and equipment.

The pipe system is configured for use in a subsea location.

The pipe system may be configured for use as part of, for example, a riser, a flow line, a jumper or the like, or any combination thereof. The pipe system may be configured for use in transporting a fluid, providing a confined conduit for tooling or the like, such as may be used in subterranean wellbore drilling operations, completion operations, intervention operations and the like.
The pipe system may be configured for use in transporting product associated with the extraction of hydrocarbons from subsea reservoirs, including accommodating the flow of hydrocarbons, carbon dioxide, water, other chemicals, solid matter, fluid and gas mixes and the like. The pipe system may be configured for use in carbon dioxide or other gas sequestration.

Another aspect of the present invention relates to a method of manufacturing a pipeline or pipe system, comprising:
coupling a deformation absorber to a metallic pipe section which has a wall comprising a metallic material,
wherein the deformation absorber comprises a composite pipe section having a wall comprising a composite material formed of at least a matrix and a plurality of reinforcing fibres embedded within the matrix, wherein the composite material is constructed to cause the deformation absorber to sustain a greater level of strain than the metallic pipe section when the pipeline is subject to deformation by a load event such that a larger proportion of deformation within the pipeline caused by a load event is focussed within the deformation absorber.

Another aspect of the present invention relates to a method of manufacturing a pipeline or pipe system, comprising:
providing a first pipe section having a wall comprising a metal material; and
coupling a second pipe section having a wall comprising a composite material formed of at least a matrix and a plurality of reinforcing fibres embedded within the matrix to an end of the first pipe section, wherein the second pipe section is configured to sustain a greater level of strain than the first pipe section when the pipe system is subject to deformation by a load event.

Embodiments of the present invention may permit a preferential control over the behaviour of the pipeline or pipe system to be achieved, which may assist when in a service condition, storage configuration, deployment/retrieval configuration or the like. For example, the pipe system may be arranged to permit a controlled deformation to be achieved within the composite second pipe section, and in some embodiments to be substantially restricted to this composite second pipe section. Such deformation may include buckling, longitudinal expansion and contraction, radial expansion and contraction, torsional deformation, bending or the like. Such deformation may include catastrophic failure, such as axial tensile failure, hoop tensile failure or the like.

Embodiments of the present invention may also or alternatively permit multiple pipe systems to be arranged in proximity to each other, wherein the composite second pipe section in each pipe system facilitates a desired behavioural characteristic, such as controlled longitudinal bending, at a common location. This may prevent or substantially minimise interference between each pipe system, facilitate more compact installations and the like. This arrangement may be of application where, for example, multiple pipe systems are bundled in a common location, extend along a common path or course, converge to a common restricted location from various directions or the like, such as convergence towards a common floating vessel, for example a FPSO vessel used in the oil and gas industry.

Another aspect of the of the present invention relates to a pipe system comprising:
a first pipe section having a wall comprising a metal material; and
a second pipe section having a wall comprising a composite material formed of at least a matrix and a plurality of reinforcing fibres embedded within the matrix, wherein the second pipe section is coupled to the first pipe section in end-to-end relation and is configured to provide a local variation in a property of the pipe system along the length thereof.

A pipe system according to embodiments of the present invention may define a hybrid pipe construction.

In use, the local variation in a property of the pipe system may establish one or more preferential characteristic in the pipe system. Such a preferential characteristic may beneficially differ from that in a pipe of uniform construction, as may be found in the prior art.

The pipe system may be configured to provide any selected preferential characteristic.

In particular embodiments, the local variation or preferential characteristic may provide for absorption of axial loading and/or deformation, such as cyclic axial loading, and, in use, the pipe system may be configured to absorb axial expansion or compression loads which may otherwise result in fatigue, undesired lateral movement or buckling of the pipe system or associated components, couplings, adjacent pipe systems or the like.

Alternatively or additionally, the local variation or preferential characteristic may provide for absorption of bending loads which may otherwise exceed the design limit of conventional uniform metal pipe systems.

Alternatively or additionally, the local variation or preferential characteristic may provide for focussing of lateral buckling, deflection or deformation within the composite pipe section. This may permit a buckling event, for example by application of a critical buckling load, to be restricted within the composite pipe section. Restricting buckling to the composite pipe section may assist in protection of the overall pipe system or adjacent pipe systems

The local variation achieved in the pipe system may be selected to provide a desired longitudinal bending characteristic along the pipe system.

The local variation may be selected to provide a desired deformation characteristic, such as bending, buckling or the like, within the pipe system when under load, such as when exposed to internal pressure, external pressure, torsional loading, radial loading, axial loading or the like. For example, the pipe section may be formed to permit bending or deformation to be restricted to a particular direction or plane.

The local variation may be selected to provide a desired longitudinal twist characteristic of the pipe system.

The local variation may be selected to provide a desired thermal expansion characteristic of the pipe system.

The local variation may be selected to provide a desired thermal insulation characteristic of the pipe system.

A preferential mechanical characteristic may be achieved, such as a selected strength, stiffness, flexural rigidity, bending, resonant characteristic or the like. A preferential thermal characteristic may be achieved, such as a selected thermal expansion characteristic, selected thermal insulation characteristic or the like.

Another aspect of the present invention relates to a method of protecting a pipeline or pipe system, comprising:
coupling a deformation absorber to a metallic pipe section,
wherein the deformation absorber comprises a composite pipe section having a wall comprising a composite material formed of at least a matrix and a plurality of reinforcing fibres embedded within the matrix, the composite material constructed to cause the deformation absorber to sustain a greater level of strain than the metallic pipe section when the pipeline is subject to deformation by a load event such that a larger proportion of deformation within the pipeline caused by a load event is focussed within the deformation absorber.

It should be understood that the features defined above in accordance with any aspect of the present invention may be utilised, either alone or in combination with any other defined feature, in any other aspect of the invention.

### BRIEF DESCRIPTION OF THE DRAWINGS

Figure 1 is a diagrammatic view of a subsea environment comprising a pipeline or pipe system according to an embodiment of the present invention;
Figure 2 is a diagrammatic side view of a pipe system for use in the subsea environment shown in Figure 1;
Figures 3A and 3B are diagrammatic side views of a pipeline or pipe system according to an embodiment of the present invention, wherein the pipe system includes a deformation absorber in the form of a composite pipe section configured to focus longitudinal expansion/contraction within said composite section;
Figure 4 is a diagrammatic side view of a further embodiment of the present invention, wherein the pipeline or pipe system includes a deformation absorber in the form of a composite pipe section configured to focus lateral buckling or deformation with said section;
Figure 5 is a diagrammatic perspective view of a pipeline or pipe system with three flow lines according to an embodiment of the present invention;
Figures 6A and 6B are side and top views, respectively, of a known flow line buckle arrangement; and
Figures 7A and 7B are side and sectional end views, respectively of a further known flow line buckle arrangement.

### DETAILED DESCRIPTION OF THE DRAWINGS

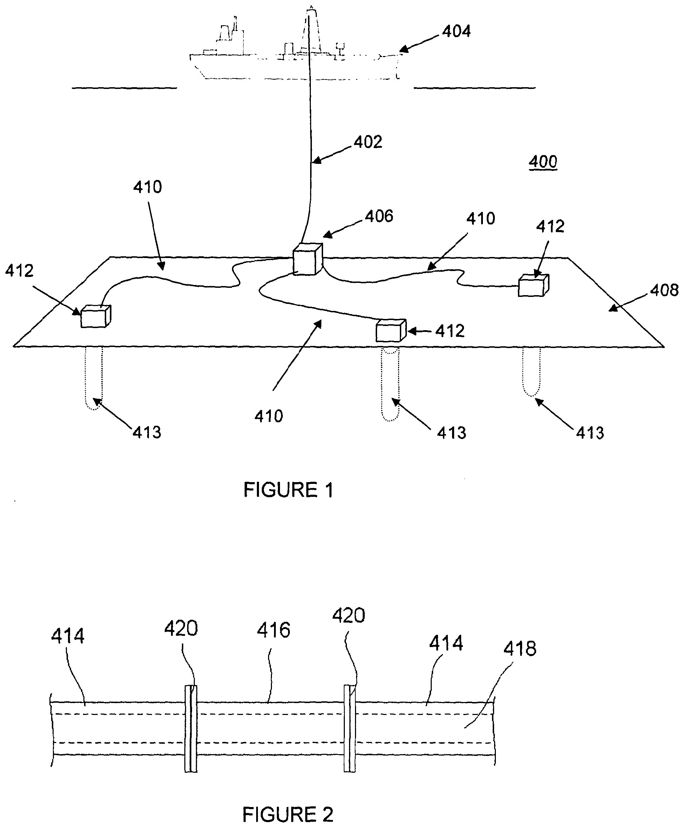

Figure 1 shows a subsea production system 400 for use in recovering hydrocarbons from a subsea hydrocarbon-bearing formation. As shown in Figure 1, a riser 402 extends from a surface vessel 404 to a manifold 406 located on the floor of a body of water, such as the sea floor 408. A number of pipelines or pipe systems 410 according to an embodiment of the present invention extend from the manifold 408 to wellheads 412 (three wellheads 412 are shown in Figure 1). The pipe systems 410 form flow lines for transport of hydrocarbons and/or equipment between wells 413 (shown in dotted line in Figure 1), the wellheads 402 and the manifold 406. Each pipe system 410 is shown as a single flow line for clarity, however it will be understood that each pipe system 410 may comprise a plurality of flow lines.

Figure 2 shows a diagrammatic side view of one of the pipe systems 410 shown in Figure 1. The pipe system 410 comprises two longitudinal steel wall pipe sections 414 and a longitudinal composite wall pipe section 416, wherein as noted below the composite pipe section 416 defines a deformation absorber. The pipe sections 414,416 are abutted end-to-end and the composite pipe section 416 is coupled between the steel wall pipe sections 414 so that a contiguous pipe bore 418 is created for the passage of fluid or equipment through the pipe system 410. In the embodiment shown, the pipe sections 414,416 are coupled by a flange connection 420, although it will be understood that any suitable means for coupling the pipe sections 414,416 may be used.

The composite pipe section 416 is configured to sustain a greater level of strain than the metal pipe sections 414 when the pipe system 410 is subject to deformation by a load event. This arrangement, in the embodiments shown, functions to focus the deformation of the pipe system substantially entirely within the composite pipe section 416, thus acting to protect the metal pipe sections 414 from excessive strains and/or stresses, material fatigue or the like.

In use, the composite pipe section 416 provides a local variation in a property of the pipe system 410 along the length of the pipe system 410. In the case of the subsea production system 400 shown in Figure 1, the composite pipe section 416 is configured to provide a local variation in the tensile strength, compressive strength and/or other property of the pipe system 410 in order that the pipe system 410 will absorb axial loads, which may be cyclic axial loads, acting on the pipe system 410 as a result of the environmental and/or operational conditions. The composite pipe section 416 may also be configured to provide a local variation in the second moment of area or other property in order to provide a local variation in the bending stiffness of the pipe system 410.

In use, the composite pipe section 416 may provide for local expansion, contraction, or bending to absorb the axial loads and reduce or eliminate the occurrence of fatigue, buckling, as may otherwise occur in a pipe system of uniform metal construction. In the embodiment shown the composite material is configured to focus longitudinal expansion and contraction within the composite pipe section 416, for example from longitudinal expansion and contraction as a result of mechanical applied forces, thermal expansion/contraction and the like.

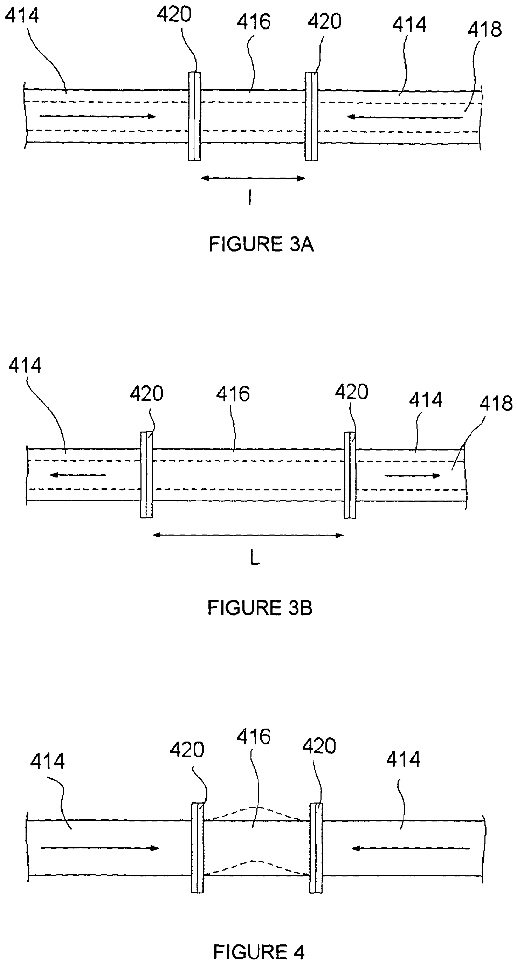

Figure 3A illustrates a pipe system 410 in a contracted configuration. Figure 3B illustrates a pipe system 410 in an expanded configuration.

Referring to Figure 3A and 3B, a composite pipe section 416 of the pipe system 410 defines a length I when in a contracted state, and an extended length L when in an expanded state. The composite pipe section 416 in the present embodiment is configured to absorb axial extension and contraction in the pipe, such as caused by thermal variations or cycles with minimal lateral deflection or deformation. In this embodiment, the composite pipe section 416 may be provided to remove or reduce any expansion and contraction effects in other longitudinal portions of the pipe, such as adjacent pipe sections 414.

A further alternative, or supplementary embodiment is shown in Figure 4. In this embodiment the pipe, the composite pipe section 416 is configured to focus lateral buckling, deflection or deformation within said composite pipe section 416, as illustrated in broken outline. This may permit a bucking event, for example by application of a critical buckling load, to be restricted within composite pipe section 416. A critical buckling load may originate from a service condition of the pipe system 410, such as axial thermal expansion or the like.

In this present embodiment restricting buckling to the composite pipe section 416 may assist in protection of other pipe sections, such as adjacent sections 414. Furthermore, by limiting lateral deviation or deformation of the pipe system to the composite pipe section, the effects of a dynamic service condition, such as caused by intermittent operation, multiphase flow or the like is minimised. For example, the composite pipe section 416, by virtue of the composite material, will not be affected by material fatigue issues, and may be able to accommodate increased dynamic operational cycles or the like while maintaining sufficient integrity. Furthermore, restricting deviation or deformation within the pipe system to within the composite pipe section may permit absorption of such movement to be achieved by shorter pipe lengths which may otherwise be required in continuous metal pipe systems.

Thus, in the present embodiment the composite pipe section 416 may be configured to firstly focus buckling at this point, and secondly to accommodate the lateral buckling deformation without resulting in exceeding the yield point of the material. Further, the composite pipe section 416 may permit multiple buckling cycles to be accommodated, while minimising effects of material fatigue and the like.

The provision of a composite pipe section 416 having distinct properties from those of the steel wall pipe sections 414 also has the benefit of permitting control over the behaviour of the whole pipe section 410.

With reference now also to Figure 5 of the drawings, there is shown a pipe system 410 according to an embodiment of the present invention and which has three flow lines. As noted above, the composite pipe section 416 is formed or configured to provide a local variation in a property or properties of the pipe system 410. A number of possible variations according to the present invention may be possible and in this embodiment the local variation of a property of the pipe system 410 is established by a localised constructional variation in the composite pipe section 416.

By providing said localised constructional variation, the bending characteristics of the pipe system 410 may be better controlled, such that the three flow lines shown in Figure 3 may be formed and arranged so that movement of the respective flow lines, for example due to fluid flow therethrough, is resisted or directed in a desired direction.

It should be understood that the embodiments described herein are merely exemplary, and that various modifications may be made thereto without departing from the scope of the invention.

For example, it should be understood that although the terms such as "circumferential" and "radial" are used herein, these are not intended to limit the pipe sections to being circular in cross-section, Instead, the pipe sections may be of any cross-sectional shape, such as oval, rectilinear or the like, and references to a circumferential segment may be considered to be a segment or sector of a perimeter of the pipe section.

## Claims

1. A pipeline or pipe system (410) configured for use in a subsea location comprising:
a metallic pipe section (414) having a wall comprising a metallic material; and
a deformation absorber coupled to the metallic pipe section (414) and comprising a composite pipe section (416) having a wall comprising a composite material formed of at least a matrix comprising a polyether ether ketone and a plurality of reinforcing fibres embedded within the matrix, wherein the composite material is constructed to cause the deformation absorber to sustain a greater level of strain than the metallic pipe section (414) when the pipeline (410) is subject to deformation by a load event such that a larger proportion of deformation within the pipeline (410) caused by a load event is focussed within the deformation absorber,
wherein the composite pipe section (416) is constructed to bend in a lateral direction during deformation of the pipe system caused by an axial load, and
wherein the composite pipe section (416) comprises a homogeneous pipe construction and wherein the composite pipe section (416) defines a substantially straight pipe section prior to deformation by a load event.

2. The pipe system (410) according to claim 1, wherein the composite pipe section (416) is constructed to accommodate or absorb substantially all deformation of the pipe system (410) during a load event.

3. The pipe system (410) according to claim 1 or 2, wherein the composite pipe section (416) is constructed to sustain a greater level of strain than the metallic pipe section (414) when the pipe system (410) is subject to deformation by a cyclical load event, an applied axial load, an applied radial load, a bending moment, and/or an applied torsional load.

4. The pipe system (410) according to any preceding claim, wherein the composite pipe section (416) defines a greater resistance to a buckling and/or tensile failure mode than the metallic pipe section (414).

5. The pipe system (410) according to any preceding claim, wherein the composite pipe section (416) is configured to accommodate deformation caused by axial thermal expansion and/or contraction within the pipe system (410).

6. The pipe system (410) according to any preceding claim, wherein the composite pipe section (416) defines a bent pipe section configured to absorb deformation within the pipe system (410) caused by an applied load.

7. The pipe system (410) according to any preceding claim, comprising a plurality of deformation absorbers.

8. The pipe system (410) according to any preceding claim, comprising a plurality of metallic pipe sections (414).

9. The pipe system (410) according to any preceding claim, comprising a connector assembly interposed between the metallic pipe section (414) and the deformation absorber to permit coupling therebetween.

10. A method for manufacturing a pipeline or pipe system (410) configured for use in a subsea location according to claim 1, comprising:
coupling a deformation absorber to a metallic pipe (414) section which has a wall comprising a metallic material,
wherein the deformation absorber comprises a composite pipe section (416) having a wall comprising a composite material formed of at least a matrix comprising polyether ether ketone and a plurality of reinforcing fibres embedded within the matrix, wherein the composite material is constructed to cause the deformation absorber to sustain a greater level of strain than the metallic pipe section (414) when the pipeline (410) is subject to deformation by a load event such that a larger proportion of deformation within the pipeline (410) caused by a load event is focussed within the deformation absorber,
wherein the composite pipe section (416) is constructed to bend in a lateral direction during deformation of the pipe system (410) caused by an axial load, and
wherein the composite pipe section (416) comprises a homogeneous pipe construction and wherein the composite pipe section (416) is substantially straight prior to deformation by a load event.

## Patentansprüche

1. Pipeline- oder Rohrsystem (410), konfiguriert für den Einsatz an einem Unterseeort, das Folgendes umfasst:
eine metallische Rohrsektion (414) mit einer Wand, die ein metallisches Material umfasst; und
einen Verformungsabsorber, der mit der metallischen Rohrsektion (414) gekoppelt ist und eine Verbundrohrsektion (416) mit einer Wand umfasst, die ein Verbundmaterial umfasst, das aus wenigstens einer Matrix, die ein Polyetheretherketon umfasst, und mehreren in der Matrix eingebetteten Verstärkungsfasern gebildet ist, wobei das Verbundmaterial so konstruiert ist, dass es bewirkt, dass der Verformungsabsorber ein höheres Belastungsniveau aushält als die metallische Rohrsektion (414), wenn die Pipeline (410) Verformung durch ein Belastungsereignis ausgesetzt ist, so dass ein größerer Anteil an durch ein Belastungsereignis verursachter Verformung in der Pipeline (410) in dem Verformungsabsorber konzentriert ist,
wobei die Verbundrohrsektion (416) so konstruiert ist, dass sie sich bei durch eine axiale Last verursachter Verformung des Rohrsystems in einer lateralen Richtung biegt, und wobei die Verbundrohrsektion (416) eine homogene Rohrkonstruktion umfasst und wobei die Verbundrohrsektion (416) vor dem Verformen durch ein Lastereignis eine im Wesentlichen gerade Rohrsektion definiert.

2. Rohrsystem (410) nach Anspruch 1, wobei die Verbundrohrsektion (416) so konstruiert ist, dass sie bei einem Belastungsereignis im Wesentlichen die gesamte Verformung des Rohrsystems (410) aufnimmt oder absorbiert.

3. Rohrsystem (410) nach Anspruch 1 oder 2, wobei die Verbundrohrsektion (416) so konstruiert ist, dass sie ein höheres Belastungsniveau aushält als die metallische Rohrsektion (414), wenn das Rohrsystem (410 Verformung durch ein zyklisches Belastungsereignis, eine aufgebrachte Axiallast, eine aufgebrachte Radiallast, ein Biegemoment und/oder eine aufgebrachte Torsionslast erfährt.

4. Rohrsystem (410) nach einem vorherigen Anspruch, wobei die Verbundrohrsektion (416) einen größeren Widerstand gegenüber Knicken und/oder Überlastbruch definiert als die metallische Rohrsektion (414).

5. Rohrsystem (410) nach einem vorherigen Anspruch, wobei die Verbundrohrsektion (416) zum Aufnehmen von durch axiale Wärmeexpansion und/oder -kontraktion im Rohrsystem (410) verursachte Verformung konfiguriert ist.

6. Rohrsystem (410) nach einem vorherigen Anspruch, wobei die Verbundrohrsektion (416) eine gebogene Rohrsektion definiert, die zum Absorbieren von durch eine aufgebrachte Last verursachte Verformung in dem Rohrsystem (410) konfiguriert ist.

7. Rohrsystem (410) nach einem vorherigen Anspruch, das mehrere Verformungsabsorber umfasst.

8. Rohrsystem (410) nach einem vorherigen Anspruch, das mehrere metallische Rohrsektionen (414) umfasst.

9. Rohrsystem (410) nach einem vorherigen Anspruch, das eine Verbinderbaugruppe zwischen der metallischen Rohrsektion (414) und dem Verformungsabsorber umfasst, um eine Kupplung dazwischen zuzulassen.

10. Verfahren zur Herstellung eines Pipeline- oder Rohrsystems (410), konfiguriert für den Einsatz an einem Unterseeort nach Anspruch 1, das Folgendes beinhaltet:
Koppeln eines Verformungsabsorbers mit einer metallischen Rohrsektion (414), die eine Wand hat, die ein metallisches Material umfasst,
wobei der Verformungsabsorber eine Verbundrohrsektion (416) mit einer Wand umfasst, die ein Verbundmaterial umfasst, das aus wenigstens einer Matrix, die Polyetheretherketon umfasst, und mehreren in der Matrix eingebetteten Verstärkungsfasern gebildet ist, wobei das Verbundmaterial so konstruiert ist, dass es bewirkt, dass der Verformungsabsorber ein höheres Belastungsniveau aushält als die metallische Rohrsektion (414), wenn die Pipeline (410) Verformung durch ein Belastungsereignis ausgesetzt ist, so dass ein größerer Anteil an durch ein Belastungsereignis verursachter Verformung in der Pipeline (410) in dem Verformungsabsorber konzentriert ist,
wobei die Verbundrohrsektion (416) so konstruiert ist, dass sie sich bei einem durch eine axiale Last verursachten Verformen des Rohrsystems (410) in einer lateralen Richtung biegt, und
wobei die Verbundrohrsektion (416) eine homogene Rohrkonstruktion umfasst und wobei die Verbundrohrsektion (416) vor dem Verformen durch ein Belastungsereignis im Wesentlichen gerade ist.

## Revendications

1. Pipeline ou système de conduites (410) configuré pour une utilisation dans un emplacement sous-marin, comprenant :
une section de conduite métallique (414) avec une paroi comportant un matériau métallique ; et
un dispositif d'absorption de déformations couplé à la section de conduite métallique (414) et comprenant une section de conduite composite (416) avec une paroi comportant un matériau composite formé d'au moins une matrice comprenant un polyéther-éther-cétone et une pluralité de fibres de renforcement incorporées au sein de la matrice, cas dans lequel le matériau composite est construit de façon à obliger le dispositif d'absorption de déformations à supporter un niveau plus élevé de contraintes que la section de conduite métallique (414) lorsque le pipeline (410) est soumis à une déformation par un événement de charge de telle sorte qu'une proportion plus grande de déformation au sein du pipeline (410) causée par un événement de charge soit focalisée au sein du dispositif d'absorption de déformations,
cas dans lequel la section de conduite composite (416) est construite de façon à fléchir suivant un sens latéral au cours de la déformation du système de conduites causée par une charge axiale, et
cas dans lequel la section de conduite composite (416) comprend une construction de conduite homogène, et cas dans lequel la section de conduite composite (416) définit une section de conduite sensiblement rectiligne avant une déformation par un événement de charge.

2. Système de conduites (410) selon la revendication 1, la section de conduite composite (416) étant construite de façon à accueillir ou absorber sensiblement toute la déformation du système de conduites (410) au cours d'un événement de charge.

3. Système de conduites (410) selon la revendication 1 ou 2, la section de conduite composite (416) étant construite de façon à supporter un niveau plus élevé de contraintes que la section de conduite métallique (414) lorsque le système de conduites (410) est soumis à une déformation par un événement de charge cyclique, une charge axiale appliquée, une charge radiale appliquée, un moment de flexion, et/ou une charge appliquée en torsion.

4. Système de conduites (410) selon une quelconque revendication précédente, la section de conduite composite (416) définissant une résistance plus élevée à un mode de flambage et/ou de rupture en traction que la section de conduite métallique (414).

5. Système de conduites (410) selon une quelconque revendication précédente, la section de conduite composite (416) étant configurée de façon à accueillir une déformation causée par une expansion et/ou une contraction thermique axiale au sein du système de conduites (410).

6. Système de conduites (410) selon une quelconque revendication précédente, la section de conduite composite (416) définissant une section de conduite fléchie configurée de façon à absorber la déformation au sein du système de conduites (410) causée par une charge appliquée.

7. Système de conduites (410) selon une quelconque revendication précédente, comprenant une pluralité de dispositifs d'absorption de déformations.

8. Système de conduites (410) selon une quelconque revendication précédente, comprenant une pluralité de sections de conduite métallique (414).

9. Système de conduites (410) selon une quelconque revendication précédente, comprenant un ensemble raccord lequel est interposé entre la section de conduite métallique (414) et le dispositif d'absorption de déformations afin de permettre un couplage entre eux.

10. Procédé de fabrication d'un pipeline ou d'un système de conduites (410) configuré pour une utilisation dans un emplacement sous-marin, selon la revendication 1, comprenant l'opération consistant à :
coupler un dispositif d'absorption de déformations à une section de conduite métallique (414) qui a une paroi comportant un matériau métallique,
cas dans lequel le dispositif d'absorption de déformations comprend une section de conduite composite (416) avec une paroi comportant un matériau composite formé d'au moins une matrice comprenant un polyéther-éther-cétone et une pluralité de fibres de renforcement incorporées au sein de la matrice, cas dans lequel le matériau composite est construit de façon à obliger le dispositif d'absorption de déformations à supporter un niveau plus élevé de contraintes que la section de conduite métallique (414) lorsque le pipeline (410) est soumis à une déformation par un événement de charge de telle sorte qu'une proportion plus grande de déformation au sein du pipeline (410) causée par un événement de charge soit focalisée au sein du dispositif d'absorption de déformations,
cas dans lequel la section de conduite composite (416) est construite de façon à fléchir suivant un sens latéral au cours de la déformation du système de conduites (410) causée par une charge axiale, et
cas dans lequel la section de conduite composite (416) comprend une construction de conduite homogène, et cas dans lequel la section de conduite composite (416) est sensiblement rectiligne avant une déformation par un événement de charge.
